Europäisches Patentamt

European Patent Office

Office européen des brevets

(19)

(11) Publication number: **0 026 434**
**B1**

(12)

# EUROPEAN PATENT SPECIFICATION

(45) Date of publication of patent specification: **21.12.83**

(51) Int. Cl.³: **B 23 K 31/00**

(21) Application number: **80105709.2**

(22) Date of filing: **23.09.80**

(54) Method of welding tube to tube plate.

(30) Priority: **28.09.79 JP 123879/79**

(43) Date of publication of application:
**08.04.81 Bulletin 81/14**

(45) Publication of the grant of the patent:
**21.12.83 Bulletin 83/51**

(84) Designated Contracting States:
**DE GB IT**

(56) References cited:
**DE - B - 2 020 616**
**FR - A - 2 064 111**

(73) Proprietor: **Hitachi, Ltd.**
**5-1, Marunouchi 1-chome**
**Chiyoda-ku Tokyo 100 (JP)**

(72) Inventor: **Kawahara, Masaru**
**36-7-302, Nishinarusawacho-1-chome**
**Hitachi-shi (JP)**
Inventor: **Shibato, Eizo**
**7-23, Osecho-4-chome**
**Hitachi-shi (JP)**
Inventor: **Matsumoto, Teruo**
**2650-68, Muramatsu Tokaimura**
**Naka-gun Ibaraki-ken (JP)**
Inventor: **Kashikura, Koji**
**2795-396, Kanesawacho**
**Hitachi-shi (JP)**

(74) Representative: **Patentanwälte Beetz sen. - Beetz**
**jun. Timpe - Siegfried - Schmitt-Fumian**
**Steinsdorfstrasse 10**
**D-8000 München 22 (DE)**

Method of welding tube to tube plate

Background of the Invention

The present invention relates, in the production of a heat exchanger, to a method of welding tubes to a tube plate. More particularly, the invention is concerned with a method of welding tubes to a tube plate with a good form of weld bead.

Hitherto, there have been proposed various methods of welding tubes to tube plate, among which the following methods (1) to (3) are adopted most ordinarily.

(1) A full-insertion type method in which the tube is fully inserted into the tube receiving bore of the tube plate before it is welded to the latter.

(2) A butt weld type method in which the tube end is held in spigot with the tube plate surface around the tube receiving bore and welded by so-called butt welding method.

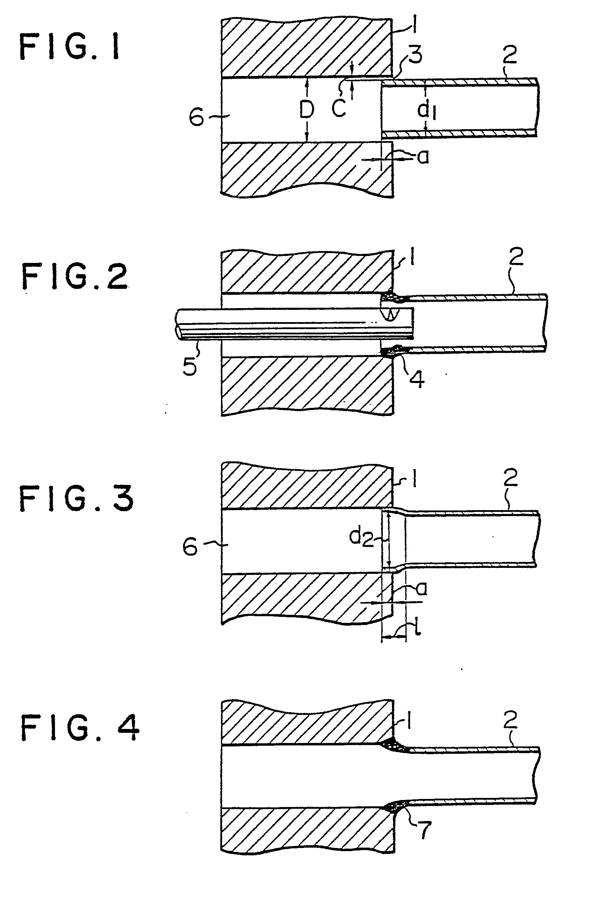

(3) A partly-inserted type method in which, as shown in Fig. 1, the end of a tube 2 is welded to the wall of the tube receiving bore 6 of the tube plate 1 while it is partly received by the bore 6.

As to the detail of these conventional welding methods, a reference shall be made to an article entitled "DEVELOPMENT OF TUBE-TO-TUBE SHEET WELDING TYPE FOR FAST BREEDER REACTOR HEAT EXCHANGER" by N. Mase et al, in Hitachi Hyoron Vol. 59, page 747 (September, 1977).

Among these conventional welding methods, the welding method (3) of partly insertion type takes advantages of both of the preceding methods (1) and (2). Namely, this welding method (3) excludes the possibility of occurrence of crevice corrosion because no gap is left between the tube and the tube plate after the welding. In addition, this welding method permits the welded part to be examined by radioactive ray or the like to ensure a high reliability of the welded structure. This welding method, however, suffers the following disadvantages.

This partly-inserted type welding method is conducted by forming a plurality of tube receiving bores 6 in the tube plate 1, inserting each tube at its end to the bore 6 by a predetermined depth $a$, inserting a welding torch 5 from the outer side of the tube plate 1 into each tube receiving bore 6 and setting the same at a predetermined position, and rotating the welding torch 5 around its axis in accordance with a control signal derived from an automatic welder (not shown).

As will be clearly seen from Fig. 1, the tube receiving bore 6 formed in the tube plate 1 has an inside diameter D greater than the outside diameter $d_1$ of the tube 2, in order that the tube 2 may be smoothly inserted into the bore 6. The relationship between the inside diameter D of the bore 6 and the outside diameter $d_1$ of the tube 2 are determined taking into account the tolerance of mechanical processing of the bore 6, as well as the tolerance of mechanical processing of the tube 2. Anyway, there is a relation expressed by $D > d_1$ between the inside diameter D of the bore 6 and the outside diameter $d_1$ of the tube 2, so that there is a gap 3 between the outer peripheral surface of the tube 2 and the inner peripheral surface of the bore 6. The size C of the gap 3 is expressed by $(D - d)/2$. Owing to the presence of this gap 3, a considerably large part of the welding heat is supplied to the tube 2, while only a small part of heat is transferred from the tube 2 to the tube plate 1. In consequence, the weld bead 4 often has such a form as having a large depth of penetration in the tube 2 and an insufficient penetration depth in the tube plate 1, as shown in Fig. 2.

In addition, the presence of the gap sometimes causes misalignment of axes of the tube receiving bore 6 and the tube 2. Namely, it is often experienced that the axis of the tube 2 is offset from the axis of the tube receiving bore 6 to form a non-uniformity of size of the gap 3 in the circumferential direction. In consequence, an uneven heat input distribution to the tube 2 and the tube plate 1 is caused in the circumferential direction during welding, resulting in an irregular bead in the circumferential direction. In the event where the penetration depth in the tube 2 is large, the tendency of flowing of the bead to the inner side is increased. Furthermore, the heat input to the tube 2 is increased to cause an excessive penetration in the tube 2 to unacceptably degrade the quality of the welding.

A technique for expanding a tube end when welding the tube to a tube plate is disclosed in the cited DE—B—2 020 616. However, in this citation the tube end is expended merely for locating and temporarily fixing the tube to the tube plate and, accordingly, the contact between the tube and the tube plate brought about by the tube end expansion is merely established partly.

Summary of the Invention

Under these circumstances, the present invention aims at providing a method of welding a tube to a tube plate in which the input heat is suitably shared by the tube and the tube plate to ensure a good form of weld bead, thereby to overcome the above-described problems of the prior art.

To this end, according to the invention, there is provided a method of welding a tube to a tube plate (1) comprising the steps of:

inserting the tube at its one end into a tube receiving bore formed in the tube plate; expanding a portion of said tube received by said tube receiving bore to bring the tube end into close contact with the inner peripheral surface of said tube receiving bore and then welding said tube to said tube plate by means of a rotating welding torch characterized in that the tube is inserted into the tube receiving bore with a depth which is almost equal to the wall thickness of said tube, that the inserted tube end is expanded over a length slightly greater than the insertion depth and that the rotating welding torch is inserted into the tube receiving bore.

Brief Description of the Drawings

Fig. 1 illustrates how a tube is set in relation to a tube plate to which it is to be welded, in a conventional welding method;

Fig. 2 illustrates the state of weld bead as obtained when the tube is welded to the tube plate by the conventional welding method;

Fig. 3 illustrates how a tube is set in relation to a tube plate to which it is to be welded, in a welding method embodying the present invention; and

Fig. 4 illustrates the state of weld bead as formed when the tube is welded to the tube plate by the welding method illustrated in Fig. 3.

Description of the Preferred Embodiments

A welding method of the invention will be described hereinunder with reference to the accompanying drawings. According to the invention, as in the case of the conventional method explained before in connection with Fig. 1, the tube receiving bore 6 formed in the tube plate 1 has an inside diameter D which is selected to be greater than the outside diameter $d_1$ of the tube 2, to make it possible to insert the tube 2 into the bore 6. The end portion of the tube 2 is inserted partly into the bore 6 of the tube plate 1. The tube end is then expanded over a length I (See Fig. 3) slightly greater than the insertion depth $a$, to make the outer peripheral surface of the tube 2 closely contact with the inner peripheral surface of the bore 6. The insertion depth $a$ is selected to be almost equal to the wall thickness of the tube, taking into consideration the heat mass balance between the inner end portion of the inserted tube to be molten and the portion of the wall of the tube receiving bore to be molten during the welding.

An insertion depth greater than the above-stated depth is not preferred because such an insertion depth causes a tendency that the innermost portion of the tube is left unmelted. To the contrary, an insertion depth smaller than the above-stated depth causes a too rapid melting of the innermost portion of the tube end while leaving the wall of the tube receiving bore not sufficiently molten, resulting in an imperfect welding.

The expansion of the tube end can be performed in various ways, that is, mechanical tube expansion using a tapered mandrel and rolls or fluidic tube expansion by means of fluid pressure can be employed. The end portion of the tube 2 after the expansion has an outside diameter $d_2$ which is substantially equal to the inside diameter D of the tube receiving bore 6, so that the gap 3, which is preserved during welding by the conventional method, is eliminated completely. Thereafter, a welding torch 5 is inserted and set in the tube receiving bore 6 as in the conventional method illustrated in Fig. 2, and is rotated by means of an automatic welder (not shown) to effect the welding.

According to the invention, since the tube end is expanded into close contact with the wall of the tube receiving bore before the welding, the welding input heat is suitably shared by the tube and the tube plate so that the excessive penetration which according to the prior arts inevitably takes place in the tube is fairly avoided while effecting an appropriate penetration in the tube plate, to ensure a remarkably improved quality of weld bead 7. The shape of weld bead is uniform in the circumferential direction so that the flowing of the welding metal to the inner side of the tube, which is often caused hitherto due to non-uniform circumferential distribution of the gap between the tube 2 and the tube plate 1, is completely avoided.

By way of example, a test welding was conducted by the welding method of the invention, with an austenitic stainless steel pipe of 21.7 mm dia. and 1.2 mm thick and a tube plate made of the same material as the tube. The welding was conducted by automatic TIG welding technic under a welding condition of a current of 70 to 90 A, voltage of 15 to 20 V and welding speed of 3 r.p.m., and a high quality of welding was obtained.

As has been described, the welding method of the invention in which the tube end is expanded to closely contact with the wall of the tube receiving bore before the welding offers the following advantages.

For instance, since the tube can be correctly and precisely located in relation to the tube receiving bore, the welding can be achieved while holding the tube concentrically with the tube receiving bore and at an adequate insertion depth into the tube receiving bore, so that the circumferential distribution of input heat is uniformalized. At the same time, the input heat is adequately shared by the tube and the tube plate because the outer surface of the tube is kept in close contact with the inner surface of the bore in the tube plate during the welding. For these reasons, the welding is achieved to have a good form of the weld bead. Furthermore, the elimination of the gap between the tube end and the wall of the tube receiving bore effectively prevents the flowing of welding metal to the inside of the tube to ensure a good shape of weld bead.

**Claim**

A method of welding a tube (2) to a tube plate (1) comprising the steps of: inserting the tube (2) at its one end into a tube receiving bore (6) formed in the tube plate (1); expanding a portion of said tube (2) received by said tube receiving bore (6) to bring the tube end into close contact with the inner peripheral surface of said tube receiving bore (6) and then welding said tube (2) to said tube plate (1) by means of a rotating welding torch characterized in that the tube (2) is inserted into the tube receiving bore (6) with a depth (a) which is almost equal to the wall thickness of said tube (2), that the inserted tube end is expanded over a length slightly greater than the insertion depth (a) and that the rotating welding torch (5) is inserted into the tube receiving bore (6).

## Revendication

Procédé pour souder des tubes (2) à des plaques tubulaires (1), comprenant les étapes suivantes: l'introduction d'une extrémité du tube (2) dans un alésage (6) de logement du tube dans la plaque tubulaire (1); l'évasement d'une partie du tube (2) logé dans l'alésage (6) de logement du tube afin de porter l'extrémité du tube en contact étroit avec la surface périphérique intérieure de l'alésage (6) de logement du tube; et, par la suite, le soudage du tube (2) à la plaque tubulaire (1) au moyen d'un chalumeau soudeur fournant, caractérisé en ce que le tube est introduit dans l'alésage (6) de logement du tube à une profondeur (a) qui est à peu près égale à l'épaisseur de poroi du tube (2), que l'extrémité introduite du tube est évasée sur une langueur surpassant légèrement la profondeur (a) d'introduction, et que le chalumeau soudeur fournant (5) est introduit dans l'alésage (6) de·logement du tube.

## Patentanspruch

Verfahren zum Einschweißen von Rohren (2) in Rohrböden (1), umfassend die folgenden Schritte: Einführen des einen Endes des Rohrs (2) in eine Rohraufnahmebohrung (6) im Rohrboden (1); Aufweiten eines Teils des in der Rohraufnahmebohrung (6) aufgenommenen Rohrs (2), um das Rohrende in engen Kontakt mit der inneren Umfangsfläche der Rohraufnahmebohrung (6) zu bringen; und anschließendes Einschweißen des Rohrs (2) in den Rohrboden (1) mittels eines umlaufenden Schweißbrenners, dadurch gekennzeichnet, daß das Rohr bis zu einer Tiefe (a), die nahezu gleich der Wandstärke des Rohrs (2) ist, in die Rohraufnahmebohrung (6) eingeführt wird, daß das eingeführte Rohrende über eine geringfügig über die Einführtiefe (a) hinausgehende Länge aufgeweitet wird, und daß der umlaufende Schweißbrenner (5) in die Rohraufnahmebohrung (6) eingeführt wird.

FIG.1

FIG.2

FIG.3

FIG.4